# EUROPEAN PATENT SPECIFICATION

(11) **EP 3 766 355 B1**
(45) Date of publication and mention of the grant of the patent: **23.02.2022**
(21) Application number: 19842366.7
(22) Date of filing: 17.05.2019
(51) Int. Cl.: A23J 3/30, A23D 9/02, A23J 3/04

(54) **METHOD OF PREPARING A PROTEIN HYDROLYSATE FROM RAW MATERIAL OF ANIMAL ORIGIN**
VERFAHREN ZUR HERSTELLUNG EINES PROTEINHYDROLYSATS AUS ROHMATERIAL TIERISCHEN URSPRUNGS
PROCEDE DE PREPARATION D'UN HYDROLYSAT DE PROTEINES A PARTIR D'UNE MATIERE PREMIERE D'ORIGINE ANIMALE

(43) Date of publication of application: 20.01.2021
(73) Proprietor: RESEARCH AND DEVELOPMENT IN FOOD SPAIN, S.L., 08860 Castelldefels (Barcelona) (ES)
(72) Inventor: GIMENO BORRAS, JOSE MARIA, 08860 Castelldefels (Barcelona) (ES)
(74) Representative: Durán-Corretjer, S.L.P.
(86) International application number: PCT/ES2019/070330
(87) International publication number: WO 2020/234487

(56) References cited:
- EP-A1- 3 262 952
- CN-A- 107 279 455
- GB-A- 2 239 655
- GB-A- 2 556 396
- US-A- 4 269 865
- US-A1- 2018 352 832

## Description

The present invention is in the field of the animal feeding industry. In particular, the present invention refers to a method of preparing a composition comprising high-quality hydrolysed proteins from raw material of animal origin. The present invention also makes reference to a composition comprising hydrolysed proteins, obtained by said method, and to the use of said composition for animal feeding and aquaculture.

Proteins are the major macromolecules in animal tissues and consist of a combination of amino acids, which are their structural unit, joined together by peptide bonds. The daily intake of an appropriate amount of protein is essential for the growth and development of animals, both in the field of animal production and for the feeding of domestic animals. These proteins, when consumed as part of the diet, are hydrolysed into small peptides and free amino acids by enzymes present in the digestive system of animals. However, the use of these proteins depends on their proper digestion and the subsequent absorption of the released peptides and amino acids, which varies depending on the animal's physiological conditions and the composition of their diets.

For this reason, in recent years there has been growing interest in the use of protein hydrolysates in animal nutrition due to their high nutritional value, high digestibility, rapid absorption and probiotic properties. Protein hydrolysates, or hydrolysed proteins, are products obtained industrially from the hydrolysis of raw materials rich in proteins of various origins, both animal and vegetable. These hydrolysates include both free amino acids and peptides of varying sizes, and their proportion depends on the type of raw material used and the preparation method used.

The known state-of-the-art methods for obtaining protein hydrolysates comprise at least one hydrolysis step, which may be chemical, physical, thermal, enzymatic and/or microbiological. These methods usually include preliminary crushing and/or solubilisation steps, as well as intermediate or subsequent steps to remove impurities and the concentration of the final product. A sterilization step is essential for the elimination of the pathogens. The final configuration of the method for obtaining protein hydrolysates will depend on the characteristics of the raw material to be used.

There are several sources of raw material, both animal and vegetable, for obtaining protein hydrolysates. One of the most commonly used raw materials for obtaining high quality hydrolysed proteins is dairy products, which are easily hydrolysed using state-of-the-art methods and allow for the production of high quality hydrolysed proteins suitable for human consumption. For example, the European Patent EP0374390 discloses a composition comprising whey protein concentrate obtained through a series of steps, including a pasteurisation thermal treatment and ultrafiltration to recover proteins of less than 10,000 Daltons. However, the use of said raw material for the production of protein hydrolysates for use in animal feeding entails too high a cost in relation to the value of the final product. Processes for the preparation of hydrolysed proteins by hydrothermal treatment of animal waste material are disclosed in CN 107279455 A and EP 3 262 952 A1, for example. obtaining hydrolysed proteins for animal use is gaining strength in recent years due to their low cost. Among the animal by-products that can be used to obtain hydrolysed proteins are those by-products derived from the meat and fish industries.

However, the known state-of-the-art methods for obtaining hydrolysed proteins from animal by-products have numerous disadvantages, including low quality of the final product (e.g. low concentration of soluble proteins or poor digestibility) and/or the use of aggressive methods and complex enzymatic hydrolysis which raise the final price of the product.

The present invention discloses a method of preparing a composition comprising high-quality hydrolysed proteins from animal by-products. The method described in this invention makes it possible, for the first time, to obtain from animal by-products a composition comprising hydrolysed proteins with a solubility higher than 80% and in which at least 90% of the soluble fraction of said composition are proteins with a molecular weight of less than 10,000 Dalton. This method involves at least two hydrolysis steps that take place under conditions of high pressure and high temperature which surprisingly increases the quality and quantity of the hydrolysed proteins obtained.

The method of the present invention has advantages with respect to known state-of-the-art methods. In the first place, the method of the present invention uses products of very low cost as raw material since in the majority of the cases they are usually leftover products or waste from the meat and/or fishing industries. Additionally, this method makes it possible to use products that would otherwise contribute to environmental pollution since traditionally there has been no economic use for them, and in most cases they usually end up in landfills. Finally, the composition comprising hydrolysed proteins prepared by the method of the present invention meets a series of parameters that make it quite significant for the animal feed industry due to their protein richness and/or concentration, meanwhile complying with the health safety requirements required for animal consumption.

The method of the present invention allows the preparation of protein compositions, both liquid and solid (in powder form), as well as obtaining, as a secondary product, a composition comprising a majority oily or fatty phase that also provides high nutritive value in the animal feed industry.

As used herein, the terms "hydrolysed proteins" and "protein hydrolysate" are interchangeable and refer to proteins that have been separated into their constituent parts by hydrolysis, i.e. where the peptide bond of the proteins has been broken and they have become free amino acids and/or peptides of varying sizes.

As used herein, the term "hydrolysis" refers to the cleavage reaction of the peptide bond that binds the protein constituents, i.e. amino acids. Said hydrolysis may be chemical, physical, thermal, enzymatic, microbiological or a combination thereof.

As used herein, the term "by-product" refers to a secondary product derived from a primary activity for which it is not useful, but from which a second utility can be derived. A by-product can be considered a "residue" of a process. In this application, a by-product is a product derived from the activities of the meat and/or fishing industry which is not intended for human consumption for strictly commercial reasons.

As used herein, the term "offal" refers to inedible organs or parts of animals. In this application, the offal is both the entrails and viscera of an animal slaughtered for human consumption.

As used herein, the term "impurities" refers to foreign substances, generally of an inorganic nature, whose presence in the final composition is undesirable because it reduces the quality and purity of the composition. Said impurities are usually physical impurities such as plastics or metals, or chemical impurities such as ashes.

As used herein, the term '"ashes" refers to a type of inorganic impurities with a high phosphate and calcium content obtained as a result of incomplete combustion of the raw material at different steps of the process taking place at elevated temperatures.

As used herein, the term "solids" refers to soluble and insoluble proteins of high molecular weight whose presence in the subsequent step is undesirable.

As used herein, the term "oily phase" refers to one of the phases of a product or composition characterised in that it is composed mainly of fats.

As used herein, the term "aqueous phase" refers to one of the phases of a product or composition characterised in that it is composed mainly of water and in which soluble or insoluble proteins may be found.

As used herein, the term "solubility" refers to the ability of a substance to dissolve in another substance called solvent. In the present application, the solubility of a composition comprising hydrolysed proteins refers to their ability to dissolve in an aqueous solvent.

As used herein, the term "soluble fraction" refers to the amount of the substance which is soluble in an aqueous solvent, in said case hydrolysed protein, with respect to the total of a composition. In addition, the term "insoluble fraction" refers to the amount of substances which do not dissolve in said aqueous solvent, such as proteins, fats or ashes, in relation to the total of a composition.

As used herein, the term "separating" refers to the partial or total separation of two or more components. The skilled person knows that in the field of process engineering, the separation steps of two or more components do not entail their complete separation since remnants of one component frequently remain in the major phase of the other component.

As used herein, the term "discarding" refers to the exclusion of a product or composition from the process taking place, but which may be recovered at a later step or in a parallel process.

As used herein, the term "percentage" or "%" refers to the weight/weight percentage unless otherwise specified.

For better understanding, drawings of an embodiment of the method of the present invention are enclosed as explanatory but not limiting examples.
Figure 1 shows a diagram of the steps of an embodiment of a method of preparing a liquid composition comprising hydrolysed proteins from animal by-products according to the present invention.
Figure 2 shows a diagram of the steps of a second embodiment of a method of preparing a liquid composition comprising hydrolysed proteins from animal by-products according to the present invention.
Figure 3 shows a diagram of the steps of a third embodiment of a method of preparing a solid composition comprising hydrolysed proteins from animal by-products according to the present invention.
Figure 4 shows a diagram of the steps of a fourth embodiment of a parallel method of preparing a secondary liquid oily composition from the oily phase or phases discarded in any of the steps of the method of the present invention, as shown in figures 1, 2 or 3.

### Detailed description

Below, preferred embodiments are described in detail as some of the non-limiting examples of the present invention in reference to the accompanying figures.

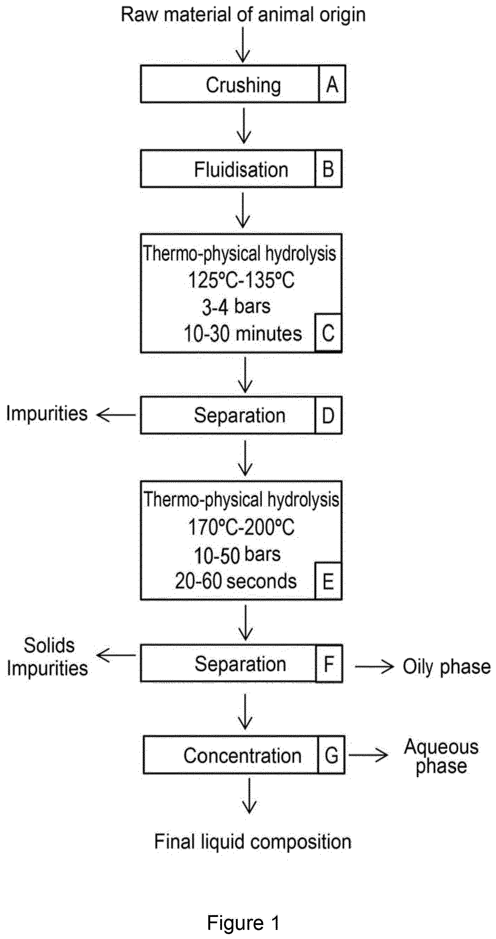

In a first aspect, the present invention discloses a method of preparing a composition comprising hydrolysed proteins from raw material of animal origin, comprising the following steps, as shown in Figure 1:
a) crushing said raw material of animal origin;
b) fluidising the product obtained in step a) by adding water up to a moisture content of between 70 and 75% by weight, and by increasing the temperature up to between 90ºC and 98ºC;
c) hydrolysing the product obtained in step b) at a temperature of between 125°C and 135°C, at a pressure of between 3 and 4 absolute bars for 10 to 30 minutes;
d) separating and discarding the impurities present in the product obtained in step c),
e) hydrolysing the product obtained in step d) at a temperature of between 170°C and 200°C, at a pressure of between 10 and 50 absolute bars and for 20 to 60 seconds;
f) separating and discarding the impurities, solids and oily phase present in the product obtained in step e);
g) concentrating the product obtained in step f) by evaporating its aqueous phase;
   wherein the product obtained in step g) is a liquid composition comprising hydrolysed proteins having a solubility higher than 80% and in which at least 90% of the soluble fraction of said composition are proteins of molecular weight less than 10 000 Daltons.

The raw material of animal origin from which a composition comprising hydrolysed proteins, according to the present invention is prepared, can be any product of animal origin. In a preferred embodiment, said product of animal origin is an animal by-product. In a preferred embodiment, said animal by-product is an Animal By-product Not Intended for Human Consumption (ABP). In a more preferred embodiment, said animal by-product is any by-product derived from the meat or fish industries. In particular, said animal by-products come from any of the poultry, swine, ruminant or fish industries.

In a preferred embodiment, the animal by-product not intended for human consumption from which a composition comprising hydrolysed proteins is prepared according to the present invention is selected from the group consisting of derived products from slaughtered animals which are considered suitable for human consumption under European Community legislation, but which are not intended for this use for commercial purposes, derived products from parts of slaughtered animals which have been rejected as unsuitable for human consumption, but which do not show any signs of disease communicable to humans or animals and which come from channels which are suitable for human consumption under Community legislation, derived products from former foodstuffs of animal origin or containing products of animal origin other than catering waste, that are not intended for human consumption for commercial purposes or due to manufacturing problems or packaging or other defects which do not present a risk to humans or animals, derived products from raw milk, shells, eggs and other offal of animals which do not show clinical signs of any disease communicable through that product to humans or to animals, derived products from the production of products intended for human consumption, including defatted bones and greaves, blood by-products, skin, hooves, feathers, wool, horns, bristles, hair and feathers originating from animals which are slaughtered in a slaughterhouse after having been considered suitable for slaughter for human consumption following an ante-mortem inspection under Community legislation or showing no clinical signs of any disease communicable through that product to humans or animals,.; derived products from fish, crustaceans, shellfish or other marine animals, with the exception of mammals, caught at sea for the production of fishmeal or derived from fresh fish from industrial plants which produce fish products intended for human consumption, such as heads, bones, tails, or viscera of fish, or heads, shells, tails or viscera of crustaceans such as shrimps or krill or of any type of shellfish or any other raw residue of the canning industry.

In a preferred embodiment of the method of preparing a composition comprising hydrolysed proteins of the present invention, it is carried out from a by-product of animal origin that is selected from the group consisting of poultry by-products, swine by-products, ruminant by-products, fish by-products, shellfish by-products.

Although the method of preparing a composition comprising hydrolysed proteins of the present invention can be carried out from any of the raw materials of animal origin detailed above, the skilled person knows that feathers from the poultry industry and hairs from the swine industry constitute distinct lines of raw material, and are therefore not used together for obtaining said composition. On the other hand, raw material of animal origin such as bones, offal and viscera, whether from the poultry or swine industry, both have a higher fat content than hairs and feathers, therefore the method of preparing a composition from said raw materials may therefore involve additional steps, as described below. In addition, raw material derived from fish, crustaceans and shellfish is also characterised by a high fat content and can therefore be used as a raw material in the method of the present invention at the same time as bones, offal and viscera derived from the poultry and swine industries.

In a more preferred embodiment, the animal by-product not intended for human consumption from which a composition comprising hydrolysed proteins is prepared according to the present invention is selected from the group consisting of feathers, hairs, bones, offal, viscera, heads, bones and tails of fish or shellfish and/or shells of crustaceans.

In a preferred embodiment, the animal by-product not intended for human consumption from which a composition comprising hydrolysed proteins is prepared according to the present invention is feathers and/or hairs.

In another preferred embodiment, the animal by-product not intended for human consumption from which a composition comprising hydrolysed proteins is prepared according to the present invention is bones, offal and/or viscera.

In another preferred embodiment, the animal by-product not intended for human consumption from which a composition comprising hydrolysed proteins is prepared according to the present invention is viscera, heads, bones and tails of fish or shellfish and/or shells of crustaceans.

In another preferred embodiment, the animal by-product not intended for human consumption from which a composition comprising hydrolysed proteins is prepared according to the present invention is bones, offal, viscera, heads, bones and tails of fish or shellfish and/or shells of crustaceans.

In an embodiment of the present invention, the method of preparing a composition comprising hydrolysed proteins from raw material of animal origin comprises an initial step a) of crushing said raw material. In said crushing step, it is preferable to obtain particles of a size equal to or less than 50 mm. A skilled person knows the maximum particle size required to carry out the method of the present invention according to the nature of the raw material, as well as the different techniques that can be used to carry out said crushing step depending on the nature of said raw material. Preferably, when the raw material of animal origin is feathers or hairs, the particles obtained at said crushing step are of a size equal to or less than 50 mm. Also, when the raw material of animal origin is bones, offal, viscera, heads, bones and tails of fish or shellfish and shells of crustaceans and/or a mixture thereof, the particles obtained in said crushing step are preferably of a size equal to or less than 30 mm.

Optionally, preservatives can be added to the raw material that prevent the multiplication of the microbial load of the same, thus avoiding or slowing down the degradation of the raw material and extending the life of the product. Said preservative is preferably phosphoric acid (H₃PO₄).

In step b), after the crushing of the raw material, the product obtained from step a) is fluidised by the addition of water until reaching a moisture content of between 70 and 75 % by weight and by increasing the temperature up to about 90ºC and 98ºC. In conjunction with the fluidisation step, the product can be homogenized to facilitate subsequent steps. In addition, where necessary, as the skilled person will recognize, a conditioning step may be carried out on the raw material by adding caustic soda (NaOH) or lime (CaO) which modifies the pH of the product in order to improve the conditions under which the subsequent steps of the method take place.

The product obtained in step b) of the method of the present invention undergoes a first hydrolysis step c). In a preferred embodiment, said first hydrolysis step is a thermo-physical hydrolysis in which the product obtained in the preceding step is exposed to high temperature and high pressure for a short period of time. The temperature to which the product is exposed can vary between 125ºC and 135ºC. Preferably, said temperature varies between 128ºC and 133ºC. More preferably, the temperature at which the first hydrolysis step c) takes place is approximately 130°C. The pressure to which the product is exposed can vary between 3 and 4 absolute bars. Preferably, said pressure varies between 3.4 and 3.8 absolute bars. More preferably, the pressure at which the first hydrolysis step c) takes place is approximately 3.6 absolute bars. The duration of said first hydrolysis step c) is between 10 and 30 minutes. More preferably, the duration of said first hydrolysis step c) is between 15 and 20 minutes.

In a later step d), the impurities present in the product obtained in the first hydrolysis step are separated and discarded. Any of the devices known to the skilled person may be used to carry out said step. It is preferable to use a rotating drum or "rotary sieve" which rotates constantly, so that when the product passes through said rotary sieve the impurities of a larger size than desired will be retained inside the drum. In a preferred embodiment, the size of the separated and discarded impurities is greater than 14 mm. More preferably, the size of said impurities is greater than 12 mm. Yet more preferably, the size of said impurities is greater than 10 mm. The impurities separated and discarded in step d) can be of a physical and/or chemical nature (ashes).

The product obtained in step d) of the method of the present invention undergoes a second hydrolysis step e). In a preferred embodiment, said second hydrolysis step is a thermo-physical hydrolysis in which the product obtained in the previous step is exposed to high temperature and high pressure for a short period of time. The temperature to which the product is exposed can vary between 170ºC and 200ºC. Preferably, said temperature varies between 175ºC and 195ºC. More preferably, the temperature at which the second hydrolysis step e) takes place is approximately 180ºC. The pressure to which the product is exposed can vary between 10 and 50 absolute bars. Preferably, this pressure varies between 20 and 40 absolute bars. More preferably, said pressure varies between 22 and 35 absolute bars. Yet more preferably, the pressure under which the second hydrolysis step e) takes place is approximately 30 absolute bars. The duration of said second hydrolysis step e) is between 20 and 60 seconds. More preferably, the duration of said second hydrolysis step e) is approximately between 25 and 40 seconds.

The two steps of thermo-physical hydrolysis c) and e) of the method of the present invention make it possible to obtain a pathogen-free and highly digestible product.

In another embodiment, the method of the present invention may also comprise at least one step of enzymatic hydrolysis. Preferably, said at least one step of enzymatic hydrolysis may take place before or after either of the two thermo-physical hydrolysis steps c) or e). In another embodiment, the method of the present invention may also comprise at least one step of enzymatic hydrolysis which takes place in substitution of the first thermo-physical hydrolysis c) step. In those embodiments that include at least one enzymatic hydrolysis step, there will also be an enzymatic inactivation step before obtaining the final product.

In another embodiment, the method for the present invention may also comprise at least one step of conditioning the product. Preferably, said at least one conditioning step of the product may take place prior to either of the two thermo-physical hydrolysis steps c) or e). More preferably, said at least one conditioning step takes place before the first thermo-physical hydrolysis step c). Where necessary, as the skilled person will recognize, said conditioning step comprises the addition of caustic soda (NaOH) or lime (CaO) to modify the pH of the product in order to improve the conditions under which the subsequent steps of the method take place.

In a later step f), the impurities, solids and oily phase present in the product obtained in the second hydrolysis step are separated and discarded. Any of the devices known to the skilled person may be used to carry out said step. Said separation step can be carried out as a single step of the method or as several separate steps. The skilled person knows that the number of steps necessary for the separation and discarding of impurities, solids and the oily phase depends on the type of raw material of animal origin that is used in the method of preparing a composition according to the present invention.

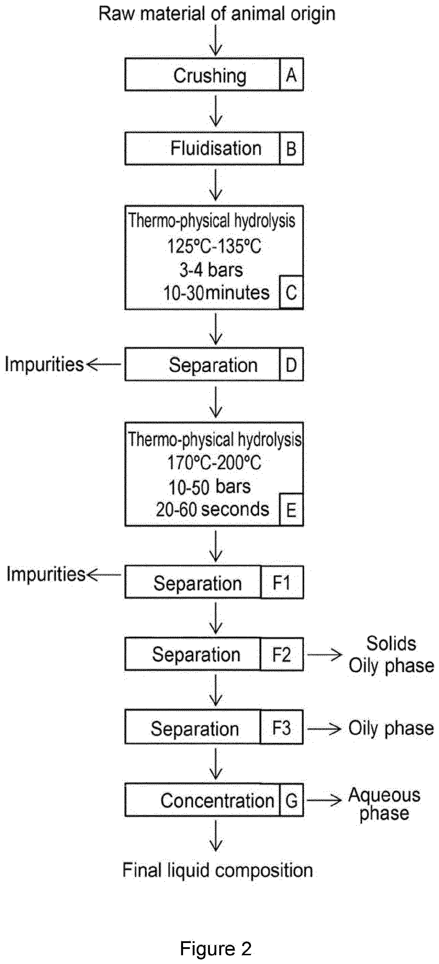

In a preferred embodiment, the separation and discarding step f) takes place in a single step f1), as shown in Figure 1. In another preferred embodiment, the raw material of animal origin has a low fat content and the separation and discarding step f) takes place in two steps (steps f1 and f2) or in three steps (steps f1, f2 and f3), as shown in Figure 2. In another preferred embodiment, the raw material of animal origin has a high fat content and the separation and discarding step f) takes place in three steps (steps f1, f2 and f3), as shown in Figure 2.

When the separation and discarding step f) takes place in one step, preferably, a rotating drum or "rotary sieve" that rotates constantly is used, so that when the product passes through the rotary sieve the impurities of a size greater than the desired size will be retained inside the drum. In a preferred embodiment, the size of the separated and discarded impurities is greater than 10 mm. More preferably, the size of said impurities is greater than 8 mm. Yet more preferably, the size of said impurities is greater than 6 mm.

When the separation and discarding step f) takes place in two steps, preferably, said two steps include a first step f1) of separation and discarding of the impurities present in the product obtained in the previous step e) and a second step f2) of separation and discarding of the solids and the oily phase present in the product obtained in the step of separation and discarding of the impurities f1). In the step of separation and discarding impurities f1), a rotating drum or "rotary sieve" that rotates constantly is preferably used, so that when the product passes through said rotary sieve the impurities of a size greater than the desired size will be retained inside the drum. In a preferred embodiment, the size of the separated and discarded impurities is greater than 8 mm. In the step of separation and discarding of the solids and the oily phase f2), a two-phase decanter-type separator is preferably used to separate the solids from the aqueous phase. Said solids are discarded and the aqueous phase, which contains the hydrolysed proteins, proceeds to the next step of the method. In another preferred embodiment, in the step of separation and discarding of solids and the oily phase f2), a three-phase separator is used that separates solids and the oily phase from the aqueous phase. For this purpose, the product obtained in step f1) is exposed to indirect steam until its temperature reaches at least 90ºC, in such a way that when the product passes through a centrifugal and filtered system, it is separated in its different phases. The solids and the oily phase are discarded and the aqueous phase, which contains the hydrolysed proteins, proceeds to the next step of the method. In a preferred embodiment, said three-phase separator is a centrifugal decanter or tricanter system. In another preferred embodiment, in the step of separation and discarding of solids and the oily phase f2) a horizontal centrifuge is used to separate the aqueous phase from the rest of the components, which are discarded.

When the separation and discarding step f) takes place in at least three steps, these three steps preferably include a first step f1) of separation and discarding of the impurities present in the product obtained in previous step e), a second step f2) of separation and discarding of the solids and oily phase present in the product obtained in the step of separation and discarding of the impurities f1), and at least a third step f3) of separation and discarding of the oily phase remaining in the product obtained in step f2). In the step of separating and discarding impurities f1), a rotating drum or "rotary sieve" which rotates constantly is preferably used,, in such a way that when the product passes through the rotary sieve, impurities of a size greater than the desired size will be retained inside the drum. In a preferred embodiment, the size of the separated and discarded impurities is greater than 8 mm. In the step of separation and discarding of the solids and the oily phase f2), a two-phase decanter is preferably used to separate the solids from the aqueous phase. Said solids are discarded and the aqueous phase, which contains the hydrolysed proteins, proceeds to the next step of the method. In another preferred embodiment, in the step of separation and discarding of solids and the oily phase f2), a three-phase separator is used that separates solids and the oily phase from the aqueous phase. For this purpose, the product obtained in step f1) is exposed to indirect steam until its temperature reaches at least 90ºC, in such a way that when the product passes through a centrifugal and filtered system, it is separated into its different phases. The solids and the oily phase are discarded and the aqueous phase, which contains the hydrolysed proteins, proceeds to the next step of the method. In a preferred embodiment, said three-phase separator is a centrifugal decanter or tricanter system. In the step of separation and discarding of the remaining oily phase f3), a vertical centrifuge is preferably used, which separates the remaining fats from the aqueous phase. Said remaining fats are discarded and the aqueous phase, which contains the hydrolysed proteins, proceeds to the next step of the method.

The choice of the system for the separation and discarding of solids and the oily phase in step f2) in any of the embodiments of the method of the present invention will depend on the type of raw material of animal origin that is used in the method of preparing a composition according to the present invention. A skilled person knows that a three-phase centrifugal decanter or tricanter type separator is preferably used for raw materials with a high fat content such as bones, offal, viscera, heads, bones and tails of fish or shellfish and/or shells of crustaceans. For raw materials with a lower fat content such as feathers or hair, a two-phase separator of the decanter type is preferably used.

At a later step g), the product obtained in the last filtration step of the method, either step f), step f2) or step f3), as appropriate, is concentrated by the evaporation of its aqueous phase. Said concentration step includes the supply of heat to evaporate, and separate the water present in the product until the concentration of hydrolysed proteins of interest is achieved. In a preferred embodiment, the product obtained in step f), f2) or f3), as appropriate, is concentrated by evaporation of the aqueous phase until 30-60% by weight of hydrolysed proteins are obtained. In a more preferred embodiment, the product obtained is concentrated until obtaining 40-50% by weight of hydrolysed proteins. Yet more preferably, the product obtained is concentrated to obtain 45% by weight of hydrolysed proteins. Said concentration step by evaporation can take place in a vacuum, which allows the chemical and nutritional properties of the soluble hydrolysed proteins to be maintained. In a preferred embodiment, such vacuum evaporation takes place in a three-step falling film evaporator under vacuum.

The product obtained in step g) of the method of the present invention is a liquid composition comprising hydrolysed proteins having a solubility higher than 80% and in which at least 90% of the soluble fraction of said composition are proteins of molecular weight less than 10,000 Daltons.

In a preferred embodiment, at least 90% of the soluble fraction of said composition are proteins of molecular weight less than 10,000 Daltons. More preferably, at least 95% of the soluble fraction of said composition are proteins with a molecular weight of less than 10,000 Daltons. In a preferred embodiment, the solubility of the composition obtained in the method of the present invention is higher than 80%. More preferably, said solubility is higher than 90%.

In a preferred embodiment, the method of the present invention also includes a sterilization step of the liquid product obtained in step g) for the elimination of pathogenic organisms that may be present thereof. Said sterilization step consists preferably of applying thermal shock to the liquid product at a temperature between 130ºC and 140ºC for 10 to 20 seconds. More preferably, said thermal shock takes place at a temperature of approximately 130ºC for 10 seconds.

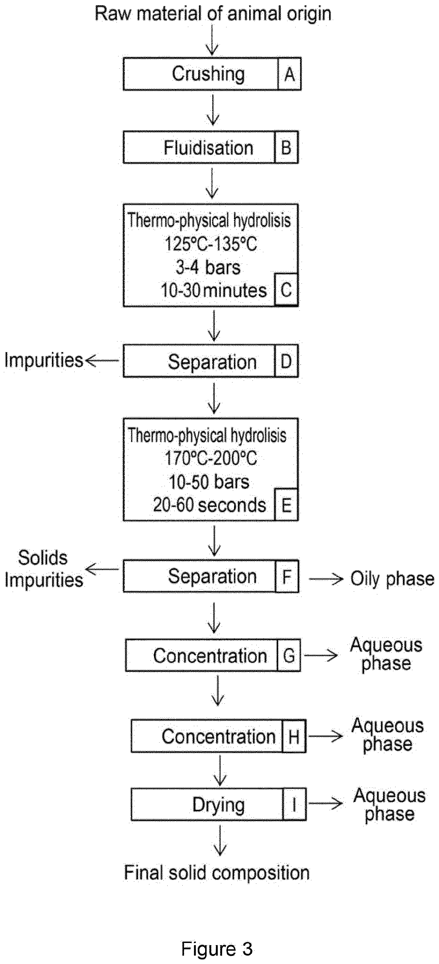

In another embodiment of the present invention, the method of preparing a composition comprising hydrolysed proteins from raw material of animal origin further comprises the following steps, as shown in Figure 3:
h) concentrating the product obtained in step g);
i) drying the product obtained in step h);
wherein the product obtained is a solid composition comprising hydrolysed proteins, having a solubility higher than 80% and in which at least 90% of the soluble fraction of said composition are proteins of molecular weight less than 10,000 Daltons. In a preferred embodiment, at least 90% of the soluble fraction of said composition are proteins of molecular weight less than 10,000 Daltons. More preferably, at least 95% of the soluble fraction of said composition are proteins with a molecular weight of less than 10,000 Daltons. In a preferred embodiment, the solubility of the composition obtained in the method of the present invention is higher than 80%. More preferably, said solubility is higher than 90%.

The concentration step h) can be carried out by any system known to the skilled person. The choice of said concentration system shall be made on the basis of the type of raw material of animal origin used in the method of the present invention, and of the type of drying system used in the subsequent step i), as the skilled person knows.

In a preferred embodiment, the concentration step h) of the product obtained in step g) takes place in an evaporator. More preferably, said evaporator is a scraped-surface evaporator.

The drying step i) can be carried out using any system known to the skilled person. The choice of said drying system shall be made on the basis of the type of raw material of animal origin used in the method of the present invention and the concentration of the product obtained in step h).

In a preferred embodiment, the drying step i) of the product obtained in step h) takes place by means of a double rotary drum system, a spray-drying system, or a pulse-jet type system, as described below.

In a preferred embodiment, when the concentration of the product obtained in step h) is between 30% and 50% w/w, the drying step i) takes place by means of a double rotary drum system, in which the product obtained in step h) is passed through the rollers of that drum that rotate with a rotation speed between 2 and 10 rpm, at a temperature between 170ºC and 190ºC, and for 2 to 8 seconds.

In another preferred embodiment, when the concentration of the product obtained in step h) is between 30% and 50% w/w, the drying step i) takes place by means of an atomization system or spray-drying, in which the product obtained in step h) is fed to said drying system at a temperature between 60ºC and 70ºC and is exposed to hot air at a temperature between 180ºC and 280ºC for 2 or 3 seconds to achieve the precipitation thereof in powder form.

In another preferred embodiment, when the concentration of the product obtained in step h) is between 30% and 70% w/w, the drying step i) takes place by means of a "Pulse-Jet" type system. The Pulse-Jet thermal system has three pulsating burners located in the upper part of the drying tower that atomise the wet product obtained in step h) by driving it through three injectors, one for each burner, and transforming it into an infinite number of micro-drops that are dried in the short period of time they are kept inside the drying chamber. The pulsating burners receive a constant natural gas flow, but the air inlet is open and closed more than 100 times per second by means of a motorised rotary valve, so that combustion is switched on and off many times. As the ignition occurs very quickly, expansive waves or pulses are generated, which together with the combustion gases and the combustion heat break the liquid product into thousands of micro-drops, which are further reduced in subsequent pulses. As a result, a jet of hot gases mixed with the product to be dried is obtained, divided into thousands of micro-drops, which are projected at speeds close to the speed of sound. The temperature at the burner outlet is about 400°C, but it cools down quickly until about 100°C in a few milliseconds since the heat of combustion contained in the gases is consumed adiabatically by evaporating the water contained in the micro-drops. The speed of this evaporation is extremely high due to the high contact surface produced by the atomization generated by the pulses.

The duration of said drying step i) is determined by the type of raw material used. When the raw material is rich in fat (e.g. bones, offal, viscera, heads, bones and tails of fish or shellfish and/or shells of crustaceans), the duration of said drying step is longer than the duration when the raw material has a lower fat content (e.g. hairs or feathers).

Preferably, when the raw material of animal origin from which a composition comprising hydrolysed proteins is prepared according to the present invention is feathers or hairs, the spray-drying system or the Pulse-Jet drying system should be used. Preferably, when the raw material of animal origin from which a composition comprising hydrolysed proteins is prepared according to the present invention is bones, offal, viscera, heads, bones and tails of fish or shellfish and/or shells of crustaceans, any of the drying systems described above will be used.

As previously described herein, the raw material of animal origin from which a composition comprising hydrolysed proteins is prepared according to the present invention is preferably a by-product of animal origin. Said animal by-product is preferably an animal by-product not intended for human consumption. More preferably, said animal by-product is selected from the group consisting of poultry by-products, swine by-products, ruminant by-products, fish by-products or shellfish by-products. Yet more preferably, said animal by-product is selected from the group consisting of feathers, hairs, bones, offal, viscera, heads, bones and tails of fish or shellfish and/or shells of crustaceans.

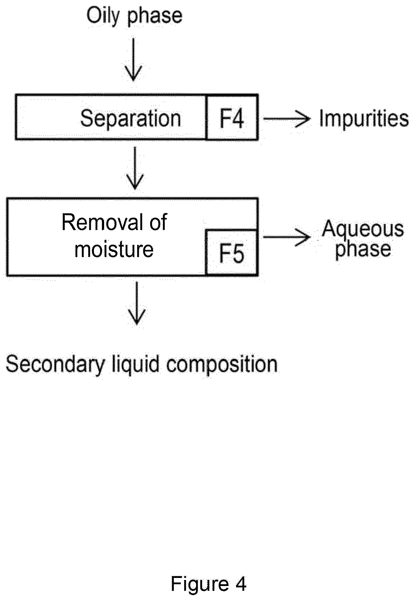

In a preferred embodiment of the method of the present invention, the oily phase discarded in steps f), f1), f2) and/or f3) or a mixture thereof is subjected to the following steps, as shown in Figure 4:
f4) separating and discarding the impurities present in the oily phase obtained in steps f), f1), f2) and/or f3) at a temperature of at least 90°C;
f5) removing the moisture from the product obtained in step f4) by a vacuum treatment;
wherein a product obtained is a secondary liquid oily composition comprising at least 90% fat, having a moisture content less than or equal to 0.5%, a degree of acidity less than 7% and a solids concentration less than or equal to 0.5%.

Step f4) of separation and discarding of the impurities that are present in the oily phase that is discarded in steps f), f1), f2) and/or f3) of the method of the present invention involves the use of indirect steam to increase the temperature of the product to a minimum temperature of 90°C. Once this temperature is reached, the product is centrifuged to be separated into two phases; the oily phase clean of impurities, and the solids, which are discarded or reintroduced in step f4) of the method to recover any remaining portion of the oily phase.

In step f5), said oily phase clean of impurities is subjected to a vacuum treatment to remove any moisture content that may have remained in the oily phase. Such vacuum treatment can take place under suction pressure of 33 absolute millibars and a maximum temperature of 80ºC to achieve the evaporation of the water residing in said oily phase.

The product obtained in step f5) is characterized in that it comprises at least 90% fat, has a moisture content less than or equal to 0.5%, a degree of acidity less than 7% and a concentration of solids less than or equal to 0.5%. In a preferred embodiment, the product obtained in step f5) is characterised by a degree of acidity of less than 5%. More preferably, the degree of acidity is less than 3%.

In another preferred embodiment of the method of the present invention, in which the raw material of animal origin is bones, offal, viscera, heads, bones and tails of fish or shellfish and/or shells of crustaceans, said method also includes two steps of pre-treatment of the product between the crushing step a) and fluidisation step b).

These pre-treatment steps are as follows:
a1) coagulating the proteins present in the product obtained in step a) at a temperature between 80-90ºC and for 15-20 minutes;
a2) separating and discarding the oily phase and the solids present in the product obtained in step a1).

Step a1) takes place in a coagulator where the product obtained in step a) is exposed to a temperature between 80 and 90ºC for 15 to 20 minutes. The coagulated product obtained in step a1) is transported to step a2) in which the aqueous phase is separated, which continues in the method of the present invention, from the oily phase and the solids which are discarded. Said separation and discarding step a2) can take place in one or two steps. When it takes place in two steps, a first step is carried out in a percolator type system and a second step in a press type system. The objective of both steps is to separate the liquid phase containing the proteins of interest from the oily phase and the solids that are discarded.

The present invention also discloses compositions comprising hydrolysed proteins obtained by means of the method described herein. In one embodiment, said composition that comprises hydrolysed proteins is characterized in that it has a solubility higher than 80% and in which at least 90% of the soluble fraction of said composition are proteins of molecular weight less than 10,000 Daltons. In a preferred embodiment, at least 90% of the soluble fraction of said composition are proteins of molecular weight less than 10,000 Daltons. More preferably, at least 95% of the soluble fraction of said composition are proteins of molecular weight less than 10,000 Daltons. In a preferred embodiment, the solubility of the composition obtained in the method of the present invention is higher than 80%. More preferably, said solubility is higher than 90%. In one embodiment, said composition is a liquid composition. In one embodiment, said composition has a pH between 3 and 7. More preferably, the pH of said composition is between 3 and 4. Yet more preferably the pH is 3.5. In another embodiment, said composition is a solid composition or in powder form.

The present invention also discloses oily compositions obtained by the method described herein. In one embodiment said composition is a secondary liquid oily composition obtained according to the method of the present invention characterized in that it comprises at least 90% fats, has a moisture content less or equal to 0.5%, a degree of acidity less than 7% and a concentration of solids less or equal to 0.5%.

The present invention also discloses a composition comprising hydrolysed proteins and that is obtained from by-products of animal origin and that is characterized in that it has a solubility higher than 80% and in which at least 90% of the soluble fraction of said composition are proteins of molecular weight less than 10,000 Daltons. In a preferred embodiment, at least 90% of the soluble fraction of said composition are proteins of molecular weight less than 10,000 Daltons. More preferably, at least 95% of the soluble fraction of said composition are proteins with a molecular weight of less than 10,000 Daltons. In a preferred embodiment, the solubility of the composition obtained in the method of the present invention is higher than 80%. More preferably, said solubility is higher than 90%. In one embodiment, said composition is a liquid composition. In another embodiment, said composition is a solid composition or in powder form.

Also disclosed is an oily composition that is obtained from animal by-products and is characterized in that it comprises at least 90% fat, has a moisture content less than or equal to 0.5%, a degree of acidity less than 7% and a concentration of solids less than or equal to 0.5%.

Also disclosed is the use of a composition comprising hydrolysed proteins according to any one of the embodiments of the present invention for animal feeding, supplemental animal feeding and aquaculture and as a probiotic for animals.

### EXAMPLES

### EXAMPLE 1: Method of preparing a liquid composition comprising proteins hvdrolvsed from by-products of the meat industry according to the present invention.

A mixture of animal by-products containing mostly feathers from the poultry industry was used as a raw material for the preparation of a liquid composition of hydrolysed proteins, according to the present invention using the method in Figure 1.

In the first place, 50,000 kg of raw material were subjected to a crushing process to reduce the particle size until it was less than or equal to 50 mm.

The crushed raw material was then prepared for the subsequent steps by adding water to obtain a moisture content of 75% by weight. Subsequently it was then subject to homogenization and heating to favour the subsequent hydrolysis of the proteins contained in the raw material. The mixture was heated with indirect steam through an outer jacket until it reached a maximum temperature of 98ºC, which remained constant for about 10 minutes. Said mixture, already converted into a hot paste with a moisture content of 73%, was transported to the next hydrolysis step.

In the first hydrolysis step, a thermo-physical hydrolysis of the product was carried out in hydrolyzer 1. Thus, the mixture was transported by an auger to which indirect steam was applied to reach a temperature of 130ºC, and a pressure of 3.5 bars was applied for 15 minutes. Preliminary analyses of the product obtained showed an improvement of the digestibility with respect to the raw material and that it was free of pathogens.

The product obtained from the first hydrolysis step was then transported to a system for the separation of impurities. In this case, a rotary sieve or "rotary sieve" type system was used. Therefore, the product from hydrolyzer 1 was evenly distributed along the rotating drum, which was constantly rotating, so that impurities greater than 12 mm were retained inside the drum and then deposited in a rejection vessel. The product obtained which was free of impurities was transported to hydrolyzer 2, where the second hydrolysis step took place, which was also thermo-physical.

In the second hydrolysis step, the product from the previous step was transported by a positive displacement pump at the same time that heat with indirect oil was applied through an outer jacket until it reached a temperature of 190ºC and a pressure of 30 bars was applied for 30 seconds. The product obtained, which was already in liquid form, presented very high digestibility and was free of pathogens.

Then, the impurities were again separated and discarded in a similar way as it was done previously, in this case of a diameter greater than 8 mm. These particles were retained inside the drum and the resulting liquids, which contained only particles of a diameter less than 8 mm, were stored in a tank.

In the next step of the method, the different phases of the product stored in the tank were separated. The objective was to separate the liquid phases, both the aqueous phase and the oily phase, from the solids. A horizontal centrifugation equipment or decanter was used for this purpose.

Next, this aqueous phase rich in hydrolysed proteins was transported to an evaporator, where it was concentrated by removing the water contained thereof by evaporation. For this purpose, heat was applied under vacuum conditions, which allowed the chemical and nutritional characteristics of the soluble products contained in the mixture to be maintained. The product obtained had a hydrolysed protein concentration of 47%.

Next, the concentrated liquid composition was transported by means of pipes in which a thermal shock was applied to eliminate the pathogens that might have been present in it. Said thermal shock consisted of increasing the temperature up to 130ºC for 8 seconds. The final composition was analysed using standard microbiological risk techniques and it was concluded that said treatment was effective in eliminating any biological risk that might have been present.

The final product obtained, which already met the health and conservation requirements for dispatch and marketing for animal consumption, was a homogeneous liquid composition, brown in colour and had the following characteristics:

| **Parameter** | **Value** | **Unit** |
|---|---|---|
| Protein | 47.00 | % |
| Fat | 1.25 | % |
| Moisture content | 50.0 | % |
| Ash | 1.00 | % |
| Digestibility, 0.002% pepsin | 95 | % |
| Degree of Hydrolysis (peptides and polypeptides < 10kDa) | 95 | % |
| Solubility in water | 97 | % |
| Density | 1.12 | g/ml |
| pH | 6.3 | |

| **Aminogram** | **Value** | **Unit** |
|---|---|---|
| Aspartic Acid | 2.58 | % |
| Glutamic Acid | 5.76 | % |
| Alanine | 2.86 | % |
| Arginine | 3.16 | % |
| Cysteine | 0.63 | % |
| Phenylalanine | 2.04 | % |
| Glycine | 4.30 | % |
| Histidine | 0.28 | % |
| Isoleucine | 2.15 | % |
| Leucine | 3.62 | % |
| Lysine | 0.75 | % |
| Methionine | 0.23 | % |
| Proline | 4.45 | % |
| Serine | 3.61 | % |
| Tyrosine | 1.26 | % |
| Threonine | 1.78 | % |
| Tryptophan | 0.22 | % |
| Valina | 3.36 | % |
| Total Amino Acids (Wet Base) | 44.04 | % |

### EXAMPLE 2: Method of preparing a solid composition comprising proteins hvdrolvsed from by-products of the meat industry according to the present invention.

The same mixture of animal by-products of example 1 was used as the raw material for the preparation of a solid composition of hydrolysed proteins, according to the present invention following the method in figure 3.

In this case, the method was similar to that used in example 1, but from the liquid product obtained in the evaporation step, a solid product in powder form was obtained by means of a series of additional steps.

Thus, the liquid product obtained after concentration by evaporation showed a concentration of hydrolysed proteins of 30%.

Said liquid product was subjected to a sterilization step for the elimination of pathogenic organisms that may have been present in it. Said sterilization step consisted of transporting the liquid product through a thermal shock exchanger at a temperature of about 130ºC for 10 seconds.

The concentrated liquid product was then dried to remove the aqueous content. Drying was carried out using a spray-drying system. Thus, the liquid product was fed to said drying system at a temperature of 65 º C and was exposed to hot air at a temperature of about 250 º C for 3 seconds to achieve the precipitate of the same in the powder form.

The product obtained in powder form was analysed using standard microbiological risk techniques and it was concluded that that treatment was effective in eliminating any biological risk that might have been present.

The final product obtained, which already met the sanitary and conservation requirements to be shipped and marketed, was a solid composition in powder form having the following characteristics:

| **Parameter** | **Value** | **Unit** |
|---|---|---|
| Protein | 91.22 | % |
| Fat | 2.98 | % |
| Moisture content | 3.85 | % |
| Ash | 1.95 | % |
| Digestibility, 0.002% pepsin | 95 | % |
| Degree of Hydrolysis (peptides and polypeptides < 10kDa) | 95 | % |
| Solubility in water | 97 | % |
| Density | 0.30 | g/ml |

### EXAMPLE 3: Method of preparing a liquid composition comprising proteins hvdrolvsed from animal by-products according to this invention.

A mixture of animal by-products containing bones, offal and viscera from the meat industry was used as a raw material for the preparation of a liquid composition of hydrolysed proteins according to the present invention using the method in Figure 1 or 2.

In the first place, 50,000 kg of raw material were subjected to a crushing process to reduce the particle size until it was less than or equal to 30 mm.

Next, the proteins present in the product obtained in the previous step were coagulated at a temperature of approximately 90ºC for 15 minutes. The coagulation step made possible to coagulate the proteins present in the raw material at the same time that the fat cells were broken down for better fat release in later steps, and microbial multiplication is halted. Once the proteins were coagulated, the mixture was transported to a percolator where the solids present were separated from the aqueous phase. These solids were then transferred to a press where the oily phase and the solids were separated from the aqueous phase. Again the solids and the oily phase were discarded, and the aqueous phase, along with the aqueous phase recovered in the percolator, continued the method for obtaining the composition of hydrolysed proteins.

The crushed raw material was then prepared for the subsequent steps by adding water until a moisture content of 70% by weight was reached. Later, it was homogenized and heated to favour the subsequent hydrolysis of the proteins contained in the raw materials. The mixture was heated with indirect steam through an outer jacket until it reached a maximum temperature of 98ºC, which remained constant for about 10 minutes. Said mixture, already converted into a hot paste with a moisture content of 75%, was transported to the next hydrolysis step.

In the first hydrolysis stage, a thermo-physical hydrolysis of the product was carried out in hydrolyzer 1. Thus, the mixture was transported by an auger to which indirect steam was applied to reach a temperature of 132ºC, and a pressure of 3.4 bars was applied for 20 minutes. Preliminary analysis of the obtained product showed an improvement of the digestibility with respect to the raw material and that it was free of pathogens.

The product obtained from the first hydrolysis step was then transported to a system for the separation of impurities. In this case, a rotary sieve or "rotary sieve" type system was used. Therefore, the product from hydrolyzer 1 was evenly distributed along the rotating drum, which is constantly rotating, so that impurities greater than 12 mm were retained inside the drum and then deposited in a rejection container. The product obtained free of impurities was transported to hydrolyzer 2, where the second hydrolysis step took place, which was also thermo-physical.

In the second hydrolysis step the product from the previous step was transported by a positive displacement pump at the same time that heat with indirect oil was applied through an outer jacket until it reached a temperature of 185ºC and a pressure of 35 bars was applied for 25 seconds. The product obtained, which was already in liquid form, presented very high digestibility and was free of pathogens. Then, the impurities were again separated and discarded in a similar way as it was done previously, in this case of a diameter greater than 8 mm. These particles were retained inside the drum and the resulting liquids, which contain only particles of a diameter less than 8 mm, were stored in a tank.

In the next step of the method, the different phases of the product stored in the tank were separated. The objective was to separate the liquid phases, both the aqueous phase and the oily phase, from the solids. For this purpose, a centrifugal decanter or tricanter was used in the first place to separate and discard the oily phase and the solids, while the aqueous phase obtained passed then to a vertical centrifuge that allowed the separation and elimination of the oily phase that may have remained in the product.

This aqueous phase rich in hydrolysed proteins was then transported to an evaporator, where it was concentrated by removing the water contained thereof by evaporation. For this purpose, heat was applied under vacuum conditions, which allowed the chemical and nutritional characteristics of the soluble products contained in the mixture to be maintained. The product obtained showed a concentration of hydrolysed proteins of 40.53%.

Next, the concentrated liquid composition was transported by means of pipes in which a thermal shock was applied to eliminate the pathogens that might have been present in it. Said thermal shock consisted of increasing the temperature to 130ºC for 8 seconds. The final composition was analysed using standard microbiological risk techniques and it was concluded that said treatment was effective in eliminating any biological risk that might have been present. In addition, phosphoric acid was added to the product to lower the pH to a value of 3.5.

The final product obtained, which already met the health and conservation requirements for dispatch and marketing, was a homogeneous liquid composition, brown in colour with the following characteristics:

| **Parameter** | **Value** | **Unit** |
|---|---|---|
| Protein | 40.53 | % |
| Fat | 4.80 | % |
| Moisture content | 51.00 | % |
| Ash | 3.67 | % |
| Digestibility, 0.002% pepsin | 95.00 | % |
| Degree of Hydrolysis (peptides and polypeptides < 10kDa) | 95.00 | % |

| **Parameter** | **Value** | **Unit** |
|---|---|---|
| Solubility in water | 85.00 | % |
| Density | 1.13 | g/ml |
| pH | 3.5 | |

### EXAMPLE 4: Method for obtaining fats from by-products of the meat industry according to the present invention.

In this case, the oily phase discarded in the different separation steps of the procedure in example 3 was used to obtain a composition comprising an oily phase, according to the present invention following the method in figures 1, 2 and 4.

Thus, both the oily phase obtained in the tricanter and the oily phase obtained in the vertical centrifuge were transported to an external tank. From said tank, the oily product was transported to a polisher, whose purpose was to complete the separation of fats, ensuring the elimination of most of the impurities. By means of indirect steam injection, the temperature of the product gradually increased until reaching a minimum temperature of 90ºC. At that time, several polishing centrifuges were activated to carry out the separation operation, obtaining two phases: the clean oily phase and without impurities, and the phase of solids. The solids were discarded and returned to the centrifugal decanter or tricanter step, to continue purifying the fats, and the clean fat was then transported to a tank that included a vacuum system where the moisture content (water) that may have remained in the product was eliminated and thus obtaining a final liquid composition that comprised a major oily phase.

The final product obtained was a composition comprising an oily phase with the following characteristics:

| **Parameter** | **Value** | **Unit** |
|---|---|---|
| Acidity | 4.08 | % |
| Moisture content | 0.45 | % |
| Solids | 0.50 | % |

### COMPARATIVE EXAMPLE 5: Method of preparing a solid composition comprising animal protein transformed from by-products of the meat industry.

The same mixture of animal by-products of example 1 was used as raw material for the preparation of a solid composition of processed animal proteins according to the traditional state-of-the-art method.

In this case, the crushing and fluidisation steps were similar to those described in example 1. The aqueous, oil and solid phases were then separated.

In a first separation step which took place in a press, a first solid phase was obtained which was discarded and a liquid phase was obtained which was stored in a tank.

Said liquid phase then passed through a centrifugal decanter or tricanter, which served to separate and discard the oily and solid phases, while the aqueous phase obtained in said decanter was transported to a vertical centrifuge for the separation and elimination of the oily phase that may have remained in the product.

Next, the protein-rich aqueous phase obtained in the vertical centrifuge was transported to an evaporator, where it was concentrated by removing the water contained in it by evaporation. For this purpose, heat was applied under vacuum conditions, which allowed the chemical and nutritional characteristics of the soluble products contained in the product to be maintained.

The product obtained which had a protein concentration of 45%, was mixed with the different solid phases obtained and discarded in previous steps and was then subjected to a final drying step.

The drying step consisted of two steps, the first phase taking place in a disc dryer where the moisture content of the product was reduced to 30%, and the second phase in a gas dryer, where the final product was obtained.

Said final product, already in powder form, was analysed using standard microbiological risk techniques and it was concluded that said treatment was effective in eliminating any biological risk that might have been present.

The final product obtained which already met the health and conservation requirements to be shipped and marketed, was a solid powder composition with the following characteristics:

| **Parameter** | **Value** | **Unit** |
|---|---|---|
| Protein | 74.5 | % |
| Fat | 17.2 | % |
| Moisture content | 4.5 | % |
| Ash | 3.8 | % |
| Digestibility, 0.002% pepsin | 28.5 | % |
| Solubility in water | 5 | % |
| Density | 0.35 | g/ml |

## Claims

1. Method of preparing a composition comprising hydrolysed proteins from raw material of animal origin, **characterised in that** it comprises the following steps:
a) crushing said raw material of animal origin;
b) fluidising the product obtained in step a) by adding water up to a moisture content of between 70 and 75% by weight, and by increasing the temperature up to between 90ºC and 98ºC;
c) hydrolysing the product obtained in step b) at a temperature of between 125°C and 135°C, at a pressure of between 3 and 4 absolute bars for 10 to 30 minutes;
d) separating and discarding the impurities present in the product obtained in step c),
e) hydrolysing the product obtained in step d) at a temperature of between 170°C and 200°C, at a pressure of between 10 and 50 absolute bars and for 20 to 60 seconds;
f) separating and discarding the impurities, solids and oily phase present in the product obtained in step e);
g) concentrating the product obtained in step f) by evaporating its aqueous phase;
wherein the product obtained in step g) is a liquid composition comprising hydrolysed proteins having a solubility higher than 80% and in which at least 90% of the soluble fraction of said composition are proteins of molecular weight less than 10 000 Daltons.

2. Method, according to claim 1, **characterised in that** said raw material of animal origin is a by-product of animal origin.

3. Method, according to claim 2, **characterised in that** said animal by-product is an animal by-product not intended for human consumption.

4. Method, according to any one of the claims 1 to 3, **characterized in that** said animal by-product is selected from the group consisting of poultry by-products, swine by-products, ruminant by-products, fish by-products and/or shellfish by-products.

5. Method, according to any one of the claims 1 to 4, **characterized in that** said animal by-product is selected from the group consisting of feathers, hairs, bones, offal, viscera, heads, bones and tails of fish or shellfish and / or shells of crustaceans.

6. Method, according to any one of the preceding claims, **characterized in that** it further comprises the following steps:
h) concentrating the product obtained in step g);
i) drying the product obtained in step h);
wherein the product obtained in step i) is a solid composition comprising hydrolysed proteins, having a solubility higher than 80% and in which at least 90% of the soluble fraction of said composition are proteins of molecular weight less than 10,000 Daltons.

7. Method, according to claim 6, wherein the drying step i) takes place by means of a double rotary drum system, a spray-drying system, or a pulse-Jet system.

8. Method, according to any one of the preceding claims, **characterized in that** the separation step f) is carried out at least by the following steps:
f1) separating and removing the impurities present in the product obtained at step e);
f2) separating and discarding the solids and oily phase present in the product obtained in step f1);
f3) separating and discarding the oily phase remaining in the product obtained in step f2).

9. Method, according to any one of the preceding claims, **characterized in that** the oily phase discarded in steps f), f1), f2) and/or f3) or a mixture thereof, is subjected to the following steps:
f4) separating and discarding the impurities present in the oily phase obtained in steps f2) and/or f3) at a temperature of at least 90ºC;
f5) removing the moisture from the product obtained in step f4) by a vacuum treatment;
wherein the product obtained in step f5) is a secondary liquid oily composition comprising at least 90% fat, having a moisture content less than or equal toO.5%, a degree of acidity less than 7% and a solids concentration less than or equal to 0.5%.

10. Method, according to any one of the preceding claims, **characterized in that** it comprises at least one further enzymatic hydrolysis step which takes place before or after either of the two steps of hydrolysis c) or e).

11. Method, according to any one of the preceding claims, **characterized in that** it comprises at least one further step of conditioning of the product which takes place before or after either of the two steps of hydrolysis c) or e).

## Patentansprüche

1. Verfahren zur Herstellung einer Zusammensetzung, die hydrolysierte Proteine aus Rohmaterial tierischen Ursprungs enthält, **dadurch gekennzeichnet, dass** es die folgenden Schritte umfasst:
a) Zerkleinern des Rohstoffs tierischen Ursprungs;
b) Fluidisieren des in Schritt a) erhaltenen Produkts durch Zugabe von Wasser bis zu einem Feuchtigkeitsgehalt zwischen 70 und 75 Gew.-% und durch Erhöhen der Temperatur auf 90 °C bis 98 °C;
c) Hydrolysieren des in Schritt b) erhaltenen Produkts bei einer Temperatur zwischen 125°C und 135°C, bei einem Druck zwischen 3 und 4 bar absolut, während 10 bis 30 Minuten;
d) Abtrennen und Beseitigen der Verunreinigungen, die in dem in Schritt c) erhaltenen Produkt enthalten sind,
e) Hydrolysieren des in Schritt d) erhaltenen Produkts bei einer Temperatur zwischen 170°C und 200°C, bei einem Druck zwischen 10 und 50 bar absolut und während 20 bis 60 Sekunden;
f) Abtrennen und Beseitigen der Verunreinigungen, Feststoffe und öligen Phase, die in dem in Schritt e) erhaltenen Produkt enthalten sind;
g) Konzentrieren des in Schritt f) erhaltenen Produkts durch Verdampfen seiner wässrigen Phase;
wobei das in Schritt g) erhaltene Produkt eine flüssige Zusammensetzung ist, die hydrolysierte Proteine mit einer Löslichkeit von mehr als 80 % umfasst und in der mindestens 90 % des löslichen Anteils der Zusammensetzung Proteine mit einem Molekulargewicht von weniger als 10.000 Dalton sind.

2. Verfahren nach Anspruch 1, **dadurch gekennzeichnet, dass** das Rohmaterial tierischen Ursprungs ein Nebenprodukt tierischen Ursprungs ist.

3. Verfahren nach Anspruch 2, **dadurch gekennzeichnet, dass** das tierische Nebenprodukt ein nicht für den menschlichen Verzehr bestimmtes tierisches Nebenprodukt ist.

4. Verfahren nach einem der Ansprüche 1 bis 3, **dadurch gekennzeichnet, dass** das tierische Nebenprodukt ausgewählt ist aus der Gruppe bestehend aus Geflügelnebenprodukten, Schweinenebenprodukten, Wiederkäuernebenprodukten, Fischnebenprodukten und/oder Schalentiernebenprodukten.

5. Verfahren nach einem der Ansprüche 1 bis 4, **dadurch gekennzeichnet, dass** das tierische Nebenprodukt ausgewählt ist aus der Gruppe bestehend aus Federn, Haaren, Knochen, Innereien, Eingeweiden, Köpfen, Knochen und Schwänzen von Fischen oder Schalentieren und/oder Schalen von Krustentieren.

6. Verfahren nach einem der vorhergehenden Ansprüche, **dadurch gekennzeichnet, dass** es außerdem die folgenden Schritte umfasst:
h) Konzentrieren des in Schritt g) erhaltenen Produkts;
i) Trocknen des in Schritt h) erhaltenen Produkts;
wobei das in Schritt i) erhaltene Produkt eine feste Zusammensetzung ist, die hydrolysierte Proteine umfasst, die eine Löslichkeit von mehr als 80 % aufweist und in der mindestens 90 % des löslichen Anteils der Zusammensetzung Proteine mit einem Molekulargewicht von weniger als 10.000 Dalton sind.

7. Verfahren nach Anspruch 6, wobei der Trocknungsschritt i) mittels eines Doppeldrehtrommelsystems, eines Sprühtrocknungssystems oder eines Puls-Jet-Systems erfolgt.

8. Verfahren nach einem der vorhergehenden Ansprüche, **dadurch gekennzeichnet, dass** der Trennschritt f) mindestens durch die folgenden Schritte durchgeführt wird:
f1) Abtrennen und Entfernen der Verunreinigungen, die in dem in Schritt e) erhaltenen Produkt enthalten sind;
f2) Abtrennen und Ausscheiden der Feststoffe und der öligen Phase, die in dem in Schritt f1) erhaltenen Produkt enthalten sind;
f3) Abtrennen und Ausscheiden der in dem in Schritt f2) erhaltenen Produkt verbliebenen öligen Phase.

9. Verfahren nach einem der vorhergehenden Ansprüche, **dadurch gekennzeichnet, dass** die in den Schritten f), f1), f2) und/oder f3) ausgeschiedene ölige Phase oder eine Mischung daraus den folgenden Schritten unterzogen wird:
f4) Abtrennen und Ausscheiden der Verunreinigungen, die in der in den Schritten f2) und/oder f3) erhaltenen öligen Phase vorhanden sind, bei einer Temperatur von mindestens 90 °C;
f5) Entziehen der Feuchtigkeit aus dem in Schritt f4) erhaltenen Produkt durch eine Vakuumbehandlung;
wobei das in Schritt f5) erhaltene Produkt eine sekundäre flüssige ölige Zusammensetzung ist, die mindestens 90 % Fett umfasst und einen Feuchtigkeitsgehalt von höchstens 0,5 %, einen Säuregrad von weniger als 7 % und eine Feststoffkonzentration von höchstens 0,5 % aufweist.

10. Verfahren nach einem der vorhergehenden Ansprüche, **dadurch gekennzeichnet, dass** es mindestens einen weiteren enzymatischen Hydrolyseschritt umfasst, der vor oder nach einem der beiden Hydrolyseschritte c) oder e) stattfindet.

11. Verfahren nach einem der vorhergehenden Ansprüche, **dadurch gekennzeichnet, dass** es mindestens einen weiteren Schritt des Konditionierens des Produkts umfasst, der vor oder nach einem der beiden Hydrolyseschritte c) oder e) stattfindet.

## Revendications

1. Procédé de préparation d'une composition comprenant des protéines hydrolysées à partir d'une matière première d'origine animale, **caractérisé en ce qu'**il comprend les étapes suivantes :
a) broyer ladite matière première d'origine animale ;
b) fluidifier le produit obtenu à l'étape a) en ajoutant de l'eau jusqu'à une teneur en humidité comprise entre 70 et 75% en poids, et en augmentant la température jusqu'à une valeur comprise entre 90°C et 98°C ;
c) hydrolyser le produit obtenu à l'étape b) à une température comprise entre 125°C et 135°C, à une pression comprise entre 3 et 4 bars absolus pendant 10 à 30 minutes ;
d) séparer et éliminer les impuretés présentes dans le produit obtenu à l'étape c),
e) hydrolyser le produit obtenu à l'étape d) à une température comprise entre 170°C et 200°C, à une pression comprise entre 10 et 50 bars absolus et pendant 20 à 60 secondes ;
f) séparer et éliminer les impuretés, les solides et la phase huileuse présents dans le produit obtenu à l'étape e) ;
g) concentrer le produit obtenu à l'étape f) par évaporation de sa phase aqueuse;
dans lequel le produit obtenu à l'étape g) est une composition liquide comprenant des protéines hydrolysées ayant une solubilité supérieure à 80% et dans laquelle au moins 90% de la fraction soluble de ladite composition sont des protéines de poids moléculaire inférieur à 10 000 Daltons.

2. Procédé, selon la revendication 1, **caractérisé en ce que** ladite matière première d'origine animale est un sous-produit d'origine animale.

3. Procédé, selon la revendication 2, **caractérisé en ce que** ledit sous-produit animal est un sous-produit animal qui n'est pas destiné à la consommation humaine.

4. Procédé, selon l'une quelconque des revendications 1 à 3, **caractérisé en ce que** ledit sous-produit animal est choisi à partir du groupe constitué par les sous-produits de volailles, les sous-produits de porcs, les sous-produits de ruminants, les sous-produits de poissons et/ou les sous-produits de crustacés.

5. Procédé, selon l'une quelconque des revendications 1 à 4, **caractérisé en ce que** ledit sous-produit animal est choisi à partir du groupe constitué par les plumes, les poils, les os, les abats, les viscères, les têtes, les arêtes et les queues de poissons ou de coquillages et/ou les carapaces de crustacés.

6. Procédé, selon l'une quelconque des revendications précédentes, **caractérisé en ce qu'**il comprend en outre les étapes suivantes :
h) concentration du produit obtenu à l'étape g) ;
i) séchage du produit obtenu à l'étape h);
dans lequel le produit obtenu à l'étape i) est une composition solide comprenant des protéines hydrolysées, ayant une solubilité supérieure à 80% et dans laquelle au moins 90% de la fraction soluble de ladite composition sont des protéines de poids moléculaire inférieur à 10.000 Daltons.

7. Procédé, selon la revendication 6, dans lequel l'étape de séchage i) a lieu au moyen d'un système à double tambour rotatif, d'un système de séchage par pulvérisation, ou d'un système à jet pulsé.

8. Procédé, selon l'une quelconque des revendications précédentes, **caractérisé en ce que** l'étape de séparation f) est réalisée au moins par les étapes suivantes :
f1) séparer et enlever les impuretés présentes dans le produit obtenu à l'étape e) ;
f2) séparer et écarter les solides et la phase huileuse présents dans le produit obtenu à l'étape f1) ;
f3) séparer et écarter la phase huileuse restant dans le produit obtenu à l'étape f2).

9. Procédé, selon l'une quelconque des revendications précédentes, **caractérisé en ce que** la phase huileuse écartée dans les étapes f), f1), f2) et/ou f3) ou un mélange de celles-ci, est soumise aux étapes suivantes :
f4) séparation et élimination des impuretés présentes dans la phase huileuse obtenue aux étapes f2) et/ou f3) à une température d'au moins 90°C ;
f5) élimination de l'humidité du produit obtenu à l'étape f4) par un traitement sous vide ;
dans lequel le produit obtenu à l'étape f5) est une composition huileuse liquide secondaire comprenant au moins 90 % de graisse, ayant une teneur en humidité inférieure ou égale à 0,5 %, un degré d'acidité inférieur à 7 % et une concentration en solides inférieure ou égale à 0,5 %.

10. Procédé, selon l'une quelconque des revendications précédentes, **caractérisé en ce qu'**il comprend au moins une étape supplémentaire d'hydrolyse enzymatique qui a lieu avant ou après l'une ou l'autre des deux étapes d'hydrolyse c) ou e).

11. Procédé, selon l'une quelconque des revendications précédentes, **caractérisé en ce qu'**il comprend au moins une étape supplémentaire de conditionnement du produit qui a lieu avant ou après l'une ou l'autre des deux étapes d'hydrolyse c) ou e).
